# EUROPÄISCHE PATENTSCHRIFT

(11) **EP 0 337 163 B1**
(45) Veröffentlichungstag und Bekanntmachung des Hinweises auf die Patenterteilung: **09.11.1994**
(21) Anmeldenummer: 89104940.5
(22) Anmeldetag: 20.03.1989
(51) Int. Cl.: H04Q 3/62, H04M 3/42

(54) **Schaltungsanordnung zur Umschaltung einer Vermittlungseinrichtung vom normalen Vermittlungsbetrieb in einen Notbetrieb und umgekehrt**
Circuit arrangement for switching-over from normal operation to emergency operation and reversely in a telephone switching device
Circuit pour commuter d'une opération normale à une opération de secours et inversement dans une installation de commutation téléphonique

(30) Priorität: 15.04.1988 DE 3812666
(43) Veröffentlichungstag der Anmeldung: 18.10.1989
(73) Patentinhaber: SIEMENS AKTIENGESELLSCHAFT, 80333 München (DE)
(72) Erfinder: Böttger, Detlev, D-5840 Schwerte 4 (DE); Dziennus, Norbert, D-4600 Dortmund (DE)

(56) Entgegenhaltungen:
- GB-A- 2 091 066
- GB-A- 2 149 615

## Beschreibung

Die Erfindung betrifft eine Schaltungsanordnung zur Umschaltung einer Vermittlungseinrichtung, insbesondere einer rechnergesteuerten Key-Fernsprechvermittlungseinrichtung vom normalen Vermittlungsbetrieb in einen Notbetrieb und umgekehrt, wobei während des durch einen den normalen Vermittlungsbetrieb ausschließenden Störungsfall verursachten Notbetriebes zumindest eine vorab festgelegte bevorzugte Teilnehmerstation unmittelbar an eine vorbestimmte Amtsleitung anschaltbar ist und wobei über diese Amtsleitung die notwendige Speisespannung für die betreffende Teilnehmerstation geliefert wird.

Um bei einem Netzausfall oder bei schwerwiegenden Software-Fehlern in einer Vermittlungseinrichtung wenigstens für eine daran angeschlossene Teilnehmerstation die Möglichkeit zu einer externen Gesprächsverbindung aufrechtzuerhalten, ist es unter anderem aus den Druckschriften GB-A-2 149 615 und GB-A-2 091 066 bekannt, eine Amtsleitung unmittelbar an diese vorbestimmte Teilnehmerstation anzuschalten. Bei dieser Amtsleitungsumschaltung wird jedoch ein für diese Teilnehmerstation während des Überganges vom Normalbetrieb in den Notbetrieb bestehende Gesprächsverbindung ausgelöst. Bei einer gewünschten Fortsetzung des Gespräches muß also die Verbindung vollständig neu aufgebaut werden. Diejenigen Teilnehmerstationen, die bei einem Notbetrieb der Vermittlungseinrichtung an eine Amtsleitung angeschaltet werden, können in einer modern konzipierten Vermittlungseinrichtung beispielsweise über ein Betriebsterminal beliebig festgelegt werden.

Aufgabe der vorliegenden Erfindung ist es, die Amtsleitungsumschaltung zu verbessern, insbesondere die notwendige Umschaltung teilnehmerfreundlich zu gestalten.

Dies wird dadurch erreicht, daß über eine Umschalteeinheit in ihrer ersten Schaltstellung die Leitungsadern dieser vorbestimmten Amtsleitung jeweils in gleicher Weise wie für die übrigen Teilnehmerstationen an die bevorzugte Teilnehmerstation unter Einbeziehung der vermittlungstechnischen Steuereinheiten und der systeminternen Verbindungswege und in ihrer zweiten Schaltstellung unmittelbar nur an die Sprechadern der bevorzugten Teilnehmerstation anschaltbar sind, daß mit Ausnahme der von einer bevorzugten Teilnehmerstation aufgebauten externen Gesprächsverbindung die Umschaltung von der ersten in die zweite Schaltstellung mindestens um die den normalen Auslösevorgang ermöglichende Zeitspanne verzögert vorgenommen wird, daß bei einem zu vollziehenden Übergang aus dem Notbetrieb in den normalen Vermittlungsbetrieb bei einer für die bevorzugte Teilnehmerstation über die zugeordnete Amtsleitung bestehenden Gesprächsverbindung zunächst sowohl die Einstellung des Verbindungsweges zu der dieser betreffenden Amtsleitung zugeordneten Anschlußeinheit als auch die Durchführung der in dieser Anschlußeinheit gegebenenfalls notwendigen Schaltfunktionen und anschließend unter Erhaltung des vorgenommenen Verbindungsaufbaus die Umschaltung von der bis dahin eingenommenen zweiten Schaltstellung in die ursprüngliche erste Schaltstellung erfolgt.

Besteht während des Überganges vom normalen Vermittlungsbetrieb in einen Notbetrieb für eine bevorzugte Teilnehmerstation, die also in einem solchen Fall an die zugeordnete Amtsleitung direkt angeschaltet wird, eine Gesprächsverbindung, so wird erfindungsgemäß die für andere Teilnehmer bestehende Verzögerung in der Umschaltung aufgehoben. Die Umschaltung erfolgt in so kurzer Zeit, daß die Verbindung nicht ausgelöst wird. Besteht jedoch für eine andere Teilnehmerstation eine solche Gesprächsverbindung, so ist die Verzögerung wirksam, wodurch eine Auslösung der Verbindung erfolgt, so daß das Fernsprechgeheimnis gewahrt bleibt. Besteht durch eine solch bevorzugte Teilnehmerstation eine Gesprächsverbindung in der Zeit, in der die Vermittlungseinrichtung ihren normalen Vermittlungsbetrieb wieder aufnimmt, so erfolgt ebenfalls keine Auslösung einer solchen Verbindung. Erfindungsgemäß wird nämlich zunächst ein interner Weg zu der für die betreffende Amtsleitung zuständigen Anschalteeinheit eingestellt und erst danach wird ohne eine zusätzliche Verzögerung die Umschaltung vorgenommen. Ohne Beeinflussung der Gesprächsverbindung kann danach das Gespräch über das Vermittlungssystem abgewickelt werden.

Eine Weiterbildung der Erfindung besteht darin, daß eine bevorzugte Teilnehmerstation durch eine entsprechende Festlegung im Kundendatenspeicher zur vorzugsweisen Benutzung bei abgehenden externen Gesprächsverbindungen eine bestimmte von mehreren Amtsleitungen zugeordnet ist. Weiterhin ist erfindungsgemäß vorgesehen, daß bei einem ankommenden Verbindungswunsch zunächst der Ruf zu der der betreffenden Amtsleitung zugeordneten bevorzugten Teilnehmerstation abgesetzt wird und erst bei einem erfolglosen Ruf die Weiterleitung an eine andere Teilnehmerstation erfolgt.

Gemäß einer Weiterbildung der Erfindung wird in einfacher Weise die Umschalteeinheit durch eine entsprechende Kontaktkombination eines Umschalterelais gebildet. Zur Realisierung der Verzögerung wird als besonders einfache Lösung bei jeder von einer nicht bevorzugten Teilnehmerstation aufgebauten externen Gesprächsverbindung für das Umschalterelais ein seinen Abfall verzögernder Schaltkreis wirksam geschaltet. Besteht also für eine andere Teilnehmerstation eine Gesprächsverbindung, so fällt das Umschalterelais verzögert ab, wodurch die Sprechverbindung dann in üblicher Weise ausgelöst wird. Diese Auslösung kann beispielsweise durch die Unterbrechung der Leitungsschleife vermittels einer Schalteinheit erfolgen, die in einem als Anschlußeinheit vorgesehenen Amtssatz enthalten ist.

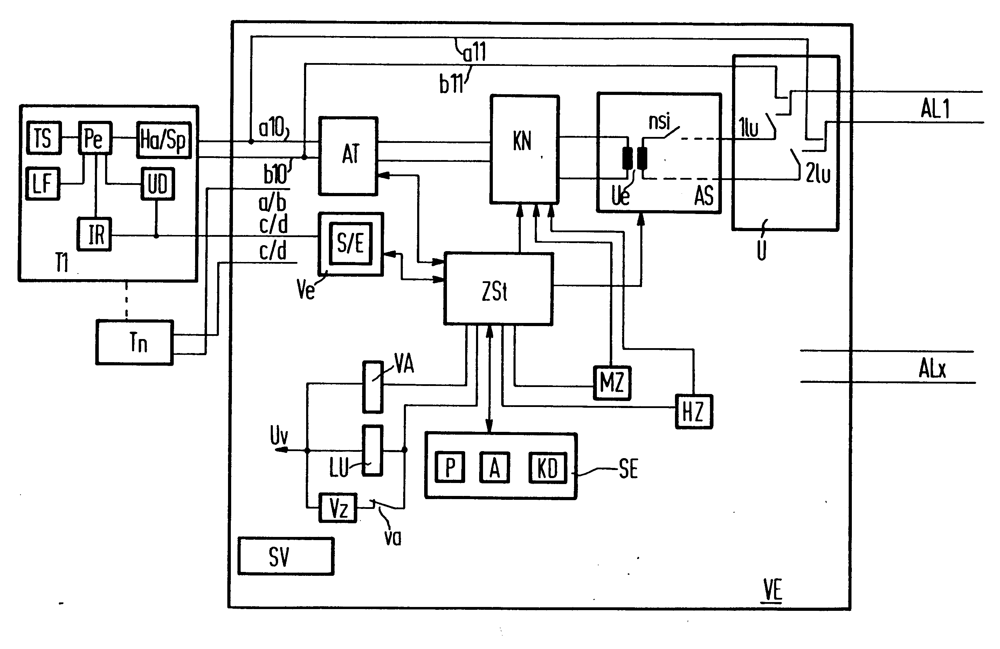

Die Erfindung wird nachstehend anhand der Figur erläutert. Diese zeigt in einem vereinfachten Blockschaltbild einige Funktionseinheiten einer Vermittlungseinrichtung VE, an die Teilnehmerendeinrichtungen T1...Tn sternförmig angeschlossen sind. Die Sprachübertragung soll im Ausführungsbeispiel auf analoge Weise erfolgen. Für den Anschluß der Endeinrichtungen wird eine vieradrige Anschlußleitung verwendet, die jeweils aus einem Sprechadernpaar a/b und einem Signalisierungsadernpaar c/d besteht. Bei einem ausschließlich digitalen Vermittlungssystem wären die Steuerverbindung und die für die Übertragung der Sprachinformationen vorgesehene Nutzverbindung auf einer zweiadrigen Anschlußleitung realisierbar, wobei dann mindestens ein Nutzkanal und ein Steuerkanal für jede Endeinrichtung durch eine bestimmte Zeitlage realisiert werden könnte. Die Teilnehmerendeinrichtungen T1...Tn werden über eine Anschalteeinheit AT, die unter anderem die Rufanschaltung und die Indikation der Teilnehmerleitungsschleife beinhaltet, mit der elektronischen Koppeleinrichtung KN verbunden. Für die zu einer öffentlichen Vermittlungsstelle führenden Leitung AL1... ALX erfolgt dies jeweils über eine zugeordnete Anschlußeinheit AS. Die Steuerungsaufgaben der Vermittlungseinrichtung VE übernimmt die zentrale Steuerrechnereinheit ZSt, die mit den genannten Einheiten AT bzw. AS und den weiteren Systemkomponenten, wie beispielsweise der Koppeleinrichtung KN, einer für die Bildung der Mehrfrequenzcode-Zeichen dienenden Einheit MZ und einer für die Erzeugung der Hörtöne zuständigen Einheit HZ gekoppelt ist. Eine solche Kopplung besteht weiterhin zwischen dieser Steuerrechnereinheit und einer jedem Signalisierungsadernpaar c/d zugeordneten Verarbeitungseinheit Ve, die ein Sendeteil S und ein Empfangsteil E enthält. Unter Einbeziehung der Verarbeitungseinheit Ve kann über die Signaladern c/d eine wechselseitige Informationsübertragung zwischen der Endeinrichtung und der Steuerrechnereinheit ZSt vorgenommen werden. Es können beispielsweise die von der Steuerrechnereinheit zu einer Endeinrichtung über die Signalisierungsadern übertragenen Informationen durch eine binäre Spannungsmodulation und die in der Gegenrichtung zu übertragenden Informationen durch eine binäre Strommodulation übermittelt werden. Mit letzterer kann dann die an der jeweiligen Endeinrichtung vorgenommene Betätigung einzelner Tasten TS signalisiert werden. Dies soll beispielsweise in Verbindung mit der Steuereinheit Pe durch die Einheit IR erfolgen. Die in der Gegenrichtung aufgrund der vorgesehenen Spannungsmodulation an den jeweiligen c/d Signalisierungsadern auftretenden Informationsbits werden im Zusammenhang mit der Steuereinheit Pe durch die Einheit UD registriert. Sie können beispielsweise Einstellinformationen für optische Anzeigeelemente LF betreffen.

Über das jeweilige Sprechadernpaar a/b werden die Sprachinformationen übertragen. Mit diesen Sprechadern ist die Sprechschaltung Sp verbunden. Sie dient im Zusammenhang mit dem Handapparat HA der Verarbeitung der übertragenen Sprachinformationen und bildet den Leitungsabschluß.

Die zentrale Steuerrechnereinheit ZSt hat Zugriff zu den in der Speichereinrichtung SE abgelegten Daten. Diese betreffen unter anderem das in dem Speicher P abgelegte gesamte Systemprogramm und die zu ihm gehörenden und im Arbeitsspeicher A enthaltenen betriebstechnischen Daten. In dem Speicherteil KD sind die Kundendaten abgelegt. Hierzu gehören beispielsweise die für die Vermittlungseinrichtung vorgesehenen Kurzrufnummern und die den einzelnen Teilnehmerendeinrichtungen zugeteilten Berechtigungen. Es ist darin auch festgehalten, welche Teilnehmerendeinrichtung in einem Notbetrieb direkt mit einer Amtsleitung AL verbunden wird. Es kann auch festgelegt sein, daß bei einem auf einer bestimmten Amtsleitung AL, z. B. AL1, ankommenden Verbindungswunsch dieser zunächst einer bestimmten Teilnehmerendeinrichtung, z. B. der Teilnehmerendeinrichtung T1, signalisiert wird. In den Fällen, in denen bei einem anstehenden Ruf die gewünschte Gesprächsverbindung dann nicht angenommen wird, kann dann mindestens eine weitere Teilnehmerstelle gerufen werden. Das Konfigurieren der in dem Kundendatenspeicher KD enthaltenen Daten kann beispielsweise über die Eingabetastatur einer als Betriebsterminal festlegbaren Endeinrichtung erfolgen.

Bei Ausfall der Spannungsversorgung SV bzw. bei schwerwiegenden Software-Fehlern erfolgt der Übergang von einem normalen Vermittlungsbetrieb in einen Notbetrieb. In einem solchen Falle erfolgt unmittelbar die Anschaltung einer vorab festgelegten Teilnehmerendeinrichtung, beispielsweise der Teilnehmerendeinrichtung T1, an eine ihr fest zugeordnete Amtsleitung, z. B. an die Amtsleitung AL1. Dies erfolgt durch die Umschalteeinheit U, die im Ausführungsbeispiel durch die eine Arbeits- und einen Ruhekontaktstellung aufweisenden Kontakte 11u und 21u eines Umschalterelais LU realisiert ist. Über die Ruhestellung der beiden Kontakte wird dann jeweils eine Amtsleitungsader über die die Vermittlungseinrichtung überbrückenden Adern a11 bzw. b11 unmittelbar mit den Sprechadern a10 bzw. b10 der Endeinrichtung T1 verbunden. Es kann vorgesehen sein, daß jeder Amtsleitung AL1...ALX jeweils eine solche bevorzugte Endeinrichtung zugeordnet ist, die bei Eintreten eines Notbetriebes in gleicher Weise über eine Umschalteeinheit U direkt mit dieser Amtsleitung verbunden wird. Im Grenzfalle kann also die Anzahl der bevorzugten Teilnehmerendeinrichtungen, für die im Notbetrieb eine solche Anschaltung an die Amtsleitung vorgesehen ist, der Anzahl dieser Amtsleitungen entsprechen.

Es ist sinnvoll, daß Gesprächsverbindungen, die von diesen bevorzugten Teilnehmerendeinrichtungen ausgehen, vorzugsweise über die ihnen zugeordnete Amtsleitung abgewickelt werden. Es wird also bei gehendem Verkehr zunächst versucht, diese betreffende Verbindung über die zugeordnete Leitung aufzubauen. Die Such-Algorithmen für die anderen Teilnehmerendeinrichtungen starten bei anderen Amtsleitungen, wobei dann die einem bevorzugten Teilnehmer zugeordnete Amtsleitung als letzte oder überhaupt nicht belegt werden kann.

Besteht im Normalbetrieb eine Verbindung über die Amtsleitung, z. B. über die Amtsleitung AL1, so ist durch die Steuerrechnereinheit ZSt das Umschalterelais LU gesetzt. Die zugehörigen Kontakte 11u und 21u befinden sich also in einer Stellung, in der die Arbeitskontaktseite entgegen der Darstellung in der Figur sich in geschlossenem Zustand befindet. Die Verbindung wird also über die Vermittlungseinrichtung abgewickelt. Geht die Verbindung von einer bevorzugten Endeinrichtung, beispielsweise der Endeinrichtung T1, aus, so wird durch die Steuerrechnereinheit ZSt auch das Relais VA gesetzt, so daß sich der zugehörige Kontakt va in Arbeitsstellung befindet. Damit wird also das eine Abfallverzögerung für das Relais LU bewirkende Verzögerungsglied Vz unwirksam geschaltet. Es ist also eine Abfallverzögerung für das Umschalterelais LU aufgehoben. Bei einem Übergang von einem Normalbetrieb in den Notbetrieb wird nun ohne besondere zusätzliche Verzögerung die Amtsleitungsumschaltung durchgeführt, da in einem solchen Fall das Relais LU abfällt. Die Umschaltung erfolgt in so kurzer Zeit, daß eine bestehende Gesprächsverbindung nicht ausgelöst wird. Die Gesprächsverbindung bleibt also durch die damit eingenommene Ruhestellung der Kontakte 11u und 21u unter Umgehung der Vermittlungsanlage über die Adern a11 und b11 bestehen. Hatte ein anderer Teilnehmer Tn den der Amtsleitung AL1 zugeordneten Amtssatz AS belegt, so ist durch den seine Ruhestellung einnehmenden Kontakt va der Verzögerungskreis Vz wirksam, so daß das Umschalterelais LU verzögert abfällt. Vorher ist das nicht dargestellte Relais NSI, dessen Kontakt nsi in dem durch einen Übertrager Ue zum Koppelfeld hin abgeriegelten Amtsleitungskreis liegt, abgefallen. Dadurch werden die üblichen Auslösevorgänge eingeleitet. Es wird also immer dann, wenn die Verbindung nicht über eine bevorzugte Endeinrichtung aufgebaut wurde, beim Übergang vom Normalbetrieb in den Notbetrieb die Amtsverbindung aufgetrennt und erst dann nach dem verzögerten Abfall des Relais LU die Umschaltung auf die zugeordnete bevorzugte Endeinrichtung T1 vorgenommen. Besteht für eine bevorzugte Endeinrichtung T1 eine Gesprächsverbindung zu dem Zeitpunkt, an dem die Vermittlungseinrichtung vom Notbetrieb in ihren normalen Vermittlungsbetrieb wieder übergeht, so wird dies in der Initialisierungsphase der Vermittlungseinrichtung erkannt. Daraufhin wird ein Koppelweg zu dem Amtssatz AS aufgebaut und der Sprechadernweg im Amtssatz durch die Betätigung des Kontaktes nsi vorbereitend geschaltet. Ist dieser Weg eingestellt, so wird durch die zentrale Steuerrechnereinheit ZSt das Umschalterelais LU gesetzt. Mit der entsprechenden Betätigung der Kontakte 11u und 21u wird die Gesprächsverbindung ohne besondere störende Beeinflussung umgeschaltet und damit über die Vermittlungseinrichtung abgewickelt. Werden also von den bevorzugten Endeinrichtungen aus Gespräche geführt, so werden diese während des Überganges vom Normalbetrieb in den Notbetrieb und beim Übergang in der umgekehrten Richtung nicht ausgelöst.

## Patentansprüche

1. Schaltungsanordnung zur Umschaltung einer Vermittlungseinrichtung, insbesondere einer rechnergesteuerten Key-Fernsprechvermittlungseinrichtung vom normalen Vermittlungsbetrieb in einen Notbetrieb und umgekehrt, wobei während des durch einen den normalen Vermittlungsbetrieb ausschließenden Störungsfall verursachten Notbetriebes zumindest eine vorab festgelegte bevorzugte Teilnehmerstation unmittelbar an eine vorbestimmte Amtsleitung anschaltbar ist und wobei über diese Amtsleitung die notwendige Speisespannung für die betreffende Teilnehmerstation geliefert wird, wobei
über eine Umschalteeinheit (U) in ihrer ersten Schaltstellung (Arbeitskontaktseite von 11u, 21u) die Leitungsadern dieser vorbestimmten Amtsleitung (AL1) jeweils in gleicher Weise wie für die übrigen Teilnehmerstationen (Tn) an die bevorzugte Teilnehmerstation (T1) unter Einbeziehung der vermittlungstechnischen Steuereinheiten und der systeminternen Verbindungswege und in ihrer zweiten Schaltstellung (Ruhelage der Kontakte 11u und 21u) unmittelbar nur an die Sprechadern (a10, b10) der bevorzugten Teilnehmerstation (T1) anschaltbar sind, gekennzeichnet durch Mittel derart, daß mit Ausnahme der von einer bevorzugten Teilnehmerstation (T1) aufgebauten externen Gesprächsverbindung die Umschaltung von der ersten in die zweite Schaltstellung mindestens um die den normalen Auslösevorgang ermöglichenden Zeitspanne verzögert vorgenommen wird, daß bei einem zu vollziehenden Übergang aus dem Notbetrieb in den normalen Vermittlungsbetrieb bei einer für die bevorzugte Teilnehmerstation (T1) über die zugeordnete Amtsleitung (AL1) bestehenden Gesprächsverbindung zunächst sowohl die Einstellung des Verbindungsweges zu der dieser betreffenden Amtsleitung zugeordneten Anschlußeinheit (AS) als auch die Durchführung der in dieser Anschlußeinheit (AS) gegebenenfalls notwendigen Schaltfunktionen (nsi) und anschließend unter Erhaltung des vorgenommenen Verbindungsaufbaus die Umschaltung von der bis dahin eingenommenen zweiten Schaltstellung in die ursprüngliche erste Schaltstellung erfolgt.

2. Schaltungsanordnung nach Anspruch 1,
**dadurch gekennzeichnet,**
daß eine bevorzugte Teilnehmerstation (T1) durch eine entsprechende Festlegung im Kundendatenspeicher (KD) zur vorzugsweisen Benutzung bei abgehenden externen Gesprächsverbindungen eine bestimmte Amtsleitung (AL1) von mehreren Amtsleitungen (AL1... ALx) zugeordnet ist.

3. Schaltungsanordnung nach Anspruch 1,
**dadurch gekennzeichnet,**
daß bei einem über eine Amtsleitung (AL1) ankommenden Verbindungswunsch zunächst der Ruf zu der der betreffenden Amtsleitung (AL1) zugeordneten bevorzugten Teilnehmerstation (T1) abgesetzt wird und erst bei erfolglosem Ruf eine Weiterleitung an eine andere Teilnehmerstation erfolgt.

4. Schaltungsanordnung nach Anspruch 1,
**dadurch gekennzeichnet,**
daß die Umschalteeinheit durch die entsprechenden Kontaktkombinationen (11u, 21u) eines Umschalterelais (LU) gebildet ist.

5. Schaltungsanordnung nach Anspruch 4,
**dadurch gekennzeichnet,**
daß bei jeder von einer nicht bevorzugten Teilnehmerstation (Tn) aufgebauten externen Gesprächsverbindung für das Umschalterelais (LU) ein seinen Abfall verzögernder Schaltkreis (VZ) wirksam geschaltet ist.

6. Schaltungsanordnung nach Anspruch 1,
**dadurch gekennzeichnet,**
daß als Anschlußeinheit ein Amtssatz (AS) vorgesehen ist, der zur Auslösung einer Verbindung ein die Unterbrechung der Leitungsschleife ermöglichende Schalteinheit (nsi) enthält.

## Claims

1. Circuit arrangement for switching a switching device, particularly a computer-controlled key telephone switching device from normal switching operation to emergency operation and conversely, in which arrangement, during the emergency operation caused by a fault which precludes normal switching operation, at least one predetermined preferred subscriber station can be directly connected to a predetermined exchange line and in which arrangement the necessary feeding voltage for the subscriber station concerned is supplied via this exchange line, in which arrangement the line wires of this predetermined exchange line (AL1) can be connected to the preferred subscriber station (T1), in each case in the same manner as for the remaining subscriber stations (Tn), including the switching control units and the intra-system connecting paths via a switch-over unit (U) in its first switch position (normally-open contact side of 11u, 21u) and, in its second switch position (normally-closed position of contacts 11u and 21u), directly only to the speech wires (a10, b10) of the preferred subscriber station (T1), characterized by means such. that, with the exception of the external call connection set up by a preferred subscriber station (T1), the switch-over from the first to the second switch position is effected delayed by at least the time interval providing for the normal release process, that, when a transition from emergency operation to normal switching operation is to be effected, with a call connection existing for the preferred subscriber station (T1) via the associated exchange line (AL1), first both the connecting path is set to the connecting unit (AS) allocated to this relevant exchange line and the switching functions (nsi) which may be necessary in this connecting unit (AS) are carried out and then, maintaining the connection set-up performed, the switch-over from the second switch position assumed until then to the original first switch position is effected.

2. Circuit arrangement according to Claim 1, characterized in that one particular exchange line (AL1) of several exchange lines (AL1...ALx) is allocated to a preferred subscriber station (T1) by means of a corresponding definition in the customer data store (KD) for the preferred use with outgoing external call connections.

3. Circuit arrangement according to Claim 1, characterized in that in the case of a connection request arriving via an exchange line (AL1), first the call to the preferred subscriber station (T1) allocated to the relevant exchange line (AL1) is transmitted and forwarding to another subscriber station is only effected with an unsuccessful call.

4. Circuit arrangement according to Claim 1, charcterized in that the switch-over unit is formed by the corresponding contact combinations (11u, 21u) of a change-over relay (LU).

5. Circuit arrangement according to Claim 1, characterized in that, with each external call connection set up by a non-preferred subscriber station (Tn), a circuit (VZ) delaying the drop out of the change-over relay (LU) is activated for the change-over relay (LU).

6. Circuit arrangement according to Claim 1, characterized in that an exchange circuit (AS) is provided as connecting unit which, for releasing a connection, contains a switching unit (nsi) which makes it possible to interrupt the line loop.

## Revendications

1. Montage pour la commutation d'un dispositif de commutation, notamment d'un dispositif de commutation téléphonique à clé, assisté par ordinateur, du fonctionnement normal de commutation à un fonctionnement d'urgence et inversement, et dans lequel, pendant le fonctionnement d'urgence déclenché par un cas de perturbation excluant le fonctionnement normal de commutation, au moins un poste d'abonné prioritaire, déterminé par avance, peut être raccordé directement à une ligne de service prédéterminée, et la tension d'alimentation nécessaire pour le poste d'abonné considéré est délivrée par l'intermédiaire de cette ligne de service, et dans lequel les conducteurs de cette ligne de service prédéterminée (AL1) peuvent être raccordés par l'intermédiaire d'une unité de commutation (U), lorsque cette dernière se trouve dans sa position de commutation (côté des contacts de travail (11u, 21u)), respectivement de la même manière que pour les autres postes d'abonnés (Tn), au poste d'abonné prioritaire (T1) moyennant l'insertion des unités de commande de la technique de commutation et des voies de jonction internes au système et sont reliés par cette unité de commutation, lorsqu'elle est située dans sa seconde position de commutation (position de repos des contacts 11u et 21u), directement et uniquement aux conducteurs téléphoniques (a10, b10) du poste d'abonné prioritaire (T1), caractérisé par des moyens tels qu'à l'exception de la liaison
téléphonique externe, établie par un poste d'abonné prioritaire (T1), la commutation de la première position de commutation à la seconde position de commutation est exécutée d'une manière retardée au moins de l'intervalle de temps permettant le processus normal de déclenchement, que dans le cas où l'on doit passer du fonctionnement d'urgence au fonctionnement normal de commutation, dans le cas d'une liaison téléphonique existant pour le poste d'abonné prioritaire (T1) par l'intermédiaire de la ligne de service associée (AL1), tout d'abord aussi bien le réglage de la voie de jonction aboutissant à l'unité de raccordement (AS) associée à cette ligne de service considérée, que l'exécution des fonctions de commutation (nsi), éventuellement nécessaires dans cette unité de raccordement (AS), sont exécutées, et ensuite, lorsque l'établissement de la liaison est obtenue, la commutation est exécutée de la seconde position de commutation prise jusqu'alors, à la première position de commutation initiale.

2. Montage suivant la revendication 1, caractérisé par le fait qu'un poste d'abonné prioritaire (T1) est associé, au moyen d'une détermination correspondante dans la mémoire de données de clients (KD) pour l'utilisation prioritaire dans le cas de liaisons téléphoniques externes de départ, une ligne de service déterminée (AL1) faisant partie de plusieurs lignes de service (AL1...ALx).

3. Montage suivant la revendication 1, caractérisé par le fait que dans le cas d'une demande de liaison arrivant par l'intermédiaire d'une ligne de service (AL1), tout d'abord l'appel envoyé au poste d'abonné prioritaire (T1) associé à la ligne de service considérée (AL1) est interrompu et c'est seulement lorsque l'appel reste sans succès, qu'une retransmission est effectuée en direction d'un autre poste d'abonné.

4. Montage suivant la revendication 1, caractérisé par le fait que l'unité de commutation est formée par les combinaisons correspondantes de contacts (11u, 21u) d'un relais de commutation (LU).

5. Montage suivant la revendication 4, caractérisé par le fait que pour chaque liaison téléphonique externe établie par un poste d'abonné (Tn) non prioritaire, pour le relais de commutation (LU), un circuit (VZ) retardant sa retombée est activé.

6. Montage suivant la revendication 1, caractérisé par le fait qu'il est prévu comme unité de raccordement, un jeu d'organes de jonction de service (AS), qui contient, pour la suppression de la liaison, une unité de commutation (nsi) permettant l'interruption de la boucle de la ligne.
